# EUROPEAN PATENT SPECIFICATION

(11) **EP 4 023 326 B1**
(45) Date of publication and mention of the grant of the patent: **05.11.2025**
(21) Application number: 20859481.2
(22) Date of filing: 16.06.2020
(51) Int. Cl.: B01D 63/00, B01D 63/10, B01D 53/22

(54) **GAS SEPARATION MEMBRANE MODULE**
GASTRENNMEMBRANMODUL
MODULE À MEMBRANE DE SÉPARATION DES GAZ

(30) Priority: 30.08.2019 JP 2019157775; 30.09.2019 JP 2019178654
(43) Date of publication of application: 06.07.2022
(73) Proprietor: Toray Industries, Inc., Tokyo 103-8666 (JP)
(72) Inventor: HIROZAWA, Hiroho, Otsu-shi, Shiga 520-8558 (JP); IIZUKA, Rina, Otsu-shi, Shiga 520-8558 (JP); TOKUYAMA, Takahiro, Otsu-shi, Shiga 520-8558 (JP); HASEGAWA, Yoko, Otsu-shi, Shiga 520-8558 (JP); MIZUNO, Yosuke, Otsu-shi, Shiga 520-8558 (JP)
(74) Representative: Mewburn Ellis LLP
(86) International application number: PCT/JP2020/023601
(87) International publication number: WO 2021/039039

(56) References cited:
- WO-A1-2015/015803
- WO-A1-2019/065493
- CN-A- 1 509 802
- CN-A- 105 120 990
- JP-A- 2000 237 554
- JP-A- 2014 140 840
- JP-A- 2015 027 666
- JP-A- 2018 086 638
- US-A1- 2016 158 693

## Description

### TECHNICAL FIELD

The present invention relates to a gas separation membrane module.

### BACKGROUND ART

In recent years, hydrogen has attracted attention as a clean energy source. Hydrogen is obtained by gasifying natural gas and fossil fuel such as coal and removing carbon dioxide from a mixed gas containing hydrogen and carbon dioxide as main components. The gas to be treated has undergone steam reforming and water gas shift, and is characteristic in having high temperature and high pressure. Further, hydrogen is also used in the Haber-Bosch process for ammonia synthesis. This is a method for synthesizing ammonia by reacting hydrogen and nitrogen at high temperature and high pressure. In a production plant, it is necessary to have a process for separating and recovering unreacted hydrogen and nitrogen.

As a method for concentrating a specific gas from a mixed gas at low cost, a membrane separation method in which a target gas is selectively permeated using a difference in gas permeability of a material has attracted attention.

Patent Document 1 discloses a technique in which a channel material of a gas separation membrane module is inclined in a thickness direction to increase the turbulent intensity of feed gas. Further, Patent Document 2 discloses a technique in which a dimensional difference is provided in dimensions of a separation membrane and a channel material to improve airtightness of a spiral separation membrane module. Furthermore, Patent Document 3 discloses a technique in which an adhesive or the like is used to provide a wall in a feed flow path formed by a net, and a flow direction of feed gas is forcibly changed to improve separation characteristics. Patent Document 4 discloses a process for producing a spiral membrane element. Patent Document 5 discloses a spiral-shaped module for acidic-gas separation. Patent Document 6 discloses an acidic gas separation laminate and module including the laminate. Patent Document 7 discloses a spiral-type gas separation membrane element, gas separation membrane module, and gas separation device including the element. Patent Document 8 discloses a method for producing an acid gas separation composite membrane and an acid gas separation membrane module.

### PRIOR ART DOCUMENTS; PATENT DOCUMENTS

Patent Document 1: JP 2016-137462; Patent Document 2: WO 2016/194833 A; Patent Document 3: JP 2015-136634; Patent Document 4: CN 1509802 A; Patent Document 5: US 2016/0158693 A1; Patent Document 6: WO 2015/015803 A1; Patent Document 7: WO 2019/065493 A1; Patent Document 8: CN 105120990 A

### SUMMARY OF THE INVENTION

### PROBLEMS TO BE SOLVED BY THE INVENTION

However, the conventional gas separation membrane module has a problem that a defect occurs in the separation membrane and the separation performance is deteriorated. That is, as a means for increasing the filling amount of the separation membrane per unit volume in the gas separation membrane module, it is considered to decrease the thickness of the channel material. However, in the case of simply thinning the channel material, the channel material is broken, thereby impairing its function, or wrinkles are generated when the channel material is wound around the center pipe. In addition, even when the channel material can be wound without any problem, fine defects that do not occur in a liquid separation membrane module occur due to stress when the gas separation membrane module is loaded in a pressure vessel.

Therefore, an object of the present invention is to provide a gas separation membrane module in which a filling amount of a gas separation membrane can be increased while improving winding stability and loading properties into a pressure vessel.

### SOLUTIONS TO THE PROBLEMS

The present invention for achieving the above object includes any of the following configurations.
A gas separation membrane module including:
a center pipe;
a plurality of separation membranes each having a feed surface and a permeate surface, the separation membranes being arranged such that the feed surfaces face each other and the permeate surfaces face each other;
a feed channel material arranged between the feed surfaces; and
a permeate channel material arranged between the permeate surfaces,
in which the separation membranes, the feed channel material, and the permeate channel material are wound around the center pipe, an average pore size on a front surface and an average pore size on a back surface of the feed channel material are each 0.95 mm or less, and an average pore size on a front surface and an average pore size on a back surface of the permeate channel material are each 0.95 mm or less. The permeate channel material includes a permeate channel material A bonded to the center pipe and a permeate channel material B bonded to the permeate channel material A. A breaking tension of the permeate channel material A is larger than a breaking tension of the permeate channel material B.
In some embodiments of the gas separation membrane module, the feed channel material and the permeate channel material each have a thickness of 10 µm to 250 µm.
In some embodiments of the gas separation membrane module, the feed channel material and the permeate channel material are any one selected from the group consisting of a net, a nonwoven fabric, and a knit fabric.
In some embodiments of the gas separation membrane module, the permeate channel material A has a breaking tension of 147 N/300 mm (15 kgf/300 mm) or more and 980 N/300 mm (100 kgf/300 mm) or less. In some embodiments of the gas separation membrane module, the permeate channel material B has a breaking tension of 19.6 N/300 mm (2 kgf/300 mm) or more and 98 N/300 mm (10 kgf/300 mm) or less.
In some embodiments of the gas separation membrane module, the permeate channel material A is a plain weave mesh or a rugged sheet, and the permeate channel material B is a nonwoven fabric.
In some embodiments of the gas separation membrane module, the separation membrane has a substrate, a porous support layer arranged on the substrate, and a separation functional layer arranged on the porous support layer, and the separation functional layer contains crosslinked polyamide or graphene.
The invention also includes a method of producing hydrogen, including: increasing a pressure of a hydrogen-containing gas and feeding the hydrogen-containing gas to the separation membrane module according to any one of (1) to (9); or feeding the hydrogen-containing gas to the separation membrane module according to any one of (1) to (9) and depressurize a permeate side of the separation membrane module to separate the hydrogen-containing gas into a permeate gas and a concentrated gas; and obtaining hydrogen.

### EFFECTS OF THE INVENTION

According to the present invention, it is possible to increase the filling amount of the gas separation membrane while improving the winding stability of the gas separation membrane module and the loading properties into the pressure vessel.

### BRIEF DESCRIPTION OF THE DRAWINGS

Fig. 1 is a partially developed perspective view showing a form of a gas separation membrane module of the present invention.
Fig. 2 is a schematic development view of a center pipe and permeate channel materials of the present invention.

### EMBODIMENTS OF THE INVENTION

Hereinafter, embodiments of the present invention will be described in detail.

### <Gas Separation Membrane Module>

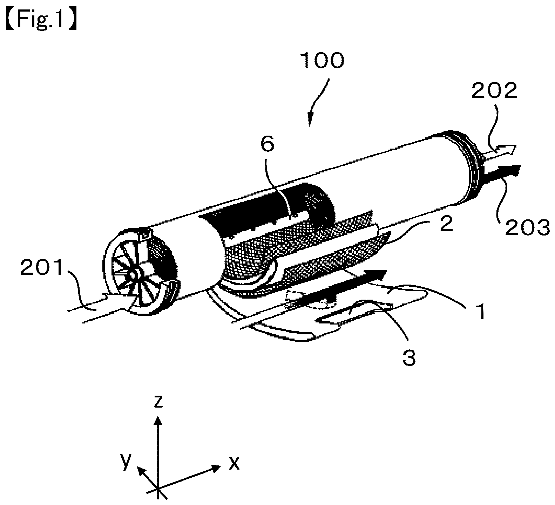

As shown in Fig. 1, a gas separation membrane module (100) according to one embodiment of the present invention includes a center pipe (6), and separation membrane leaves and permeate channel materials (3) wound around the center pipe (6). The direction of the x-axis shown in Fig. 1 is the longitudinal direction of the center pipe (6). The direction of the y-axis is perpendicular to the longitudinal direction of the center pipe.

The center pipe (6) is a hollow (cylindrical) member whose at least downstream end is open so that a permeate gas described later is discharged. When a plurality of gas separation membrane modules 100 is connected, a center pipe whose both ends are open is employed. A plurality of holes is provided to a side surface (side surface in a cylindrical shape) of the center pipe 6.

The separation membrane leaf includes: a plurality of separation membranes (1) each having a feed surface and a permeate surface, the separation membranes being arranged such that the feed surfaces face each other and the permeate surfaces face each other; and a feed channel material (2) arranged between the feed surfaces of the separation membranes (1). Note that, for example, a case where one membrane is folded with its permeate or feed surface facing inward and wound around the center pipe is also included in the case where a "plurality of separation membranes" is provided.

Further, the permeate channel material (3) is arranged between the permeate surfaces of the separation membranes (1), and is wound around the center pipe (6) together with the separation membrane leaf to form the gas separation membrane module (100).

A feed gas (201) is fed from one end surface of the gas separation membrane module (100). The feed gas (201) is separated while moving in the longitudinal direction of the center pipe (6) of the gas separation membrane module (100), and a permeate gas (202) that has permeated through the separation membrane passes the holes at the side surface of the center pipe (6) through the inside of the center pipe (6) and is discharged from the end of the center pipe. The feed gas that has not been filtered is discharged as a concentrated gas (203) from the other end surface of the gas separation membrane module (100).

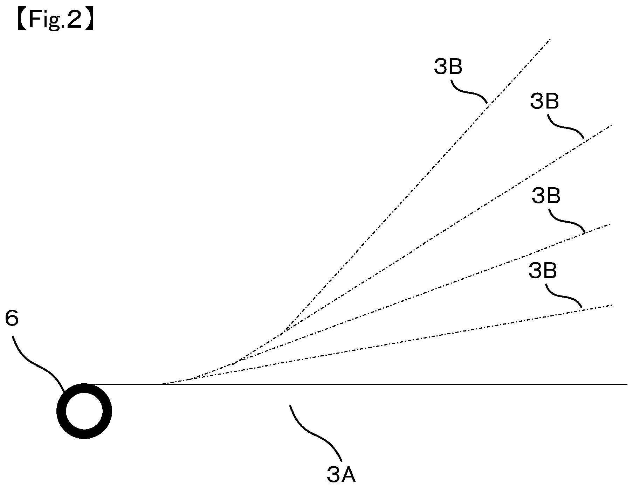

As another form of the gas separation membrane module of the present invention, Fig. 2 exemplifies an aspect in which a permeate channel material A (3A) among a plurality of permeate channel materials is bonded to the center pipe (6), and the other permeate channel materials B (3B) are bonded to the permeate channel material A (3A). At this time, the breaking tension of the permeate channel material A is larger than the breaking tension of the permeate channel materials B, and the details will be described later.

In the present invention, the feed channel material and the permeate channel material described later can also be applied to a gas separation membrane module according to an aspect other than Fig. 1 and Fig. 2.

### <Feed Channel Material and Permeate Channel Material>

### (Form)

The gas separation membrane module of the present invention includes a feed channel material and a permeate channel material. Examples of the channel material include a net and a nonwoven fabric, as well as a knit such as tricot, a woven fabric such as a plain weave mesh, and a porous sheet having protrusions such as a rugged sheet. Further, a protrusion functioning as a channel material may be fixed to the feed surface and/or the permeate surface of the separation membrane.

### (Average Pore Size)

In the case of operation at several MPa such as in water treatment applications, a reinforcing material such as filament winding is attached to the outer periphery of the module to prevent breakage of the module. Meanwhile, in the gas separation membrane module, since the viscosity and density of the feed fluid are low, the module is less likely to be broken, and filament winding can be removed. However, if only the filament winding is omitted, the module is strongly gripped when the module is loaded into the pressure vessel, whereby the separation membrane is damaged by the channel material, and the module performance may be deteriorated.

On the other hand, in the present invention, since the module includes a channel material having a small average pore size, the space where the separation membrane falls is small even when the module is strongly gripped, and the loaded stress is dispersed. As a result, an excessive load is not applied to the module during loading, and thus physical destruction of the separation membrane is reduced, and deterioration of separation performance is suppressed.

In order to suppress falling of the separation membrane into the channel material and to disperse stress during module loading, in the present invention, an average pore size on a front surface and an average pore size on a back surface of the feed channel material are each 0.95 mm or less, and an average pore size on a front surface and an average pore size on a back surface of the permeate channel material are each 0.95 mm or less. The average pore size is preferably 0.4 mm or less, and particularly preferably 0.1 mm or less.

The average pore size is an average value of circle equivalent diameters represented by "4 × area of pore in surface direction of channel material/circumferential length of the pore". The areas and circumferential lengths of 30 pores in one surface of the channel material are measured to calculate circle equivalent diameters.
Further, an average value of 30 circle equivalent diameters is calculated. An average value of circle equivalent diameters in the other surface of the channel material is calculated in the same manner as described above. In this way, the average pore sizes on the front and back surfaces of each channel material are calculated.

The feed channel material and the permeate channel material may be the same or different in material, shape, and average pore size.

### (Permeate Channel Materials A and B)

In the present invention, for example, the permeate channel materials may be bonded as shown in Fig. 2 and then wound around the center pipe together with the separation membrane leaves. That is, there may be an aspect that a permeate channel material A (3A) among a plurality of permeate channel materials may be bonded to the center pipe (6), and the other permeate channel materials B (3B) may be bonded to the permeate channel material A (3A).

In the production of the gas separation membrane module, the end of one permeate channel material A (3A) of the permeate channel materials (3A, 3B) is fixed to the center pipe (6) by adhesion, and the other permeate channel materials B (3B) are bonded onto the permeate channel material A (3A). In a state where the separation membranes and the feed channel materials are stacked between the permeate channel materials (3A, 3B), the permeate channel material fixed to the center pipe is wound while applying tension toward the outside in the winding direction of the center pipe (in the case of Fig. 2, while pulling the permeate channel material A (3A) in the right direction) without causing slack. As described above, to the permeate channel material fixed to the center pipe, a load in the direction of gravity by the other permeate channel materials, the separation membrane, and the feed channel material as well as a load to the outside in the winding direction are simultaneously applied.

As the permeate channel material A to which a load is applied as described above, a permeate channel material having a breaking tension of 15 kgf/300 mm (147 N/300 mm) or more may be used, so that it is possible to reduce the occurrence of breakage and wrinkling. Meanwhile, when a large repulsive force is generated against the load at the time of winding, it is necessary to increase the winding tension, so a crack may occur in the permeate channel material A. In addition, when the gas separation membrane module is wound while increasing the winding tension, the channel material is continuously wound while being bent, and the circularity of the cross section of the gas separation membrane module decreases, whereby it is difficult to load the gas separation membrane module into the vessel. In a case where the breaking tension of the permeate channel material A is 100 kgf/300 mm (980 N/300 mm) or less, the occurrence of such a defect is suppressed. That is, the breaking tension of the permeate channel material A is preferably 15 kgf/300 mm or more and 100 kgf/300 mm or less (147 N/300 mm or more and 980 N/300 mm or less), and more preferably 15 kgf/300 mm or more and 30 kgf/300 mm or less (147 N/300 mm or more and 294 N/300 mm or less).

In addition, since the rigidity of the permeate channel material that supports the separation membrane at the time of winding affects the winding properties, the breaking tension of the permeate channel material B is set to be lower than that of the permeate channel material A. Consequently, even when the permeate channel material A having a high breaking tension is used, it is possible to reduce the strength of the entire laminated body of the separation membrane, the feed channel material, and the permeate channel material, and it is possible to suppress the repulsive force against the winding. Specifically, the breaking tension of the permeate channel material B may be set to 2 kgf/300 mm or more and 10 kgf/300 mm or less (19.6 N/300 mm or more and 98 N/300 mm or less), and preferably 5 kgf/300 mm or more and 10 kgf/300 mm or less (49 N/300 mm or more and 98 N/300 mm or less), so that it is possible to suppress breakage, wrinkling, displacement, and reduction in circularity.

Fig. 2 shows a case where the number of permeate channel materials B included in the gas separation membrane module is 4, but there is no limitation on the number of permeate channel materials B.

From the same viewpoint as the reason why the average pore size and breaking tension are as described above and from the viewpoint of handleability, a plain weave mesh or a rugged sheet (such as a porous sheet to which protrusions are fixed or a film formed into a rugged shape and subjected to perforation processing) is preferable as the permeate channel material A, and a nonwoven fabric is preferable as the permeate channel material B.

### (Thickness)

The feed channel material and the permeate channel material are preferably thin. As described above, in a case where deformation such as bending is applied to a channel material for producing a module, stress is generated in the channel material and the channel material is easily broken. Accordingly, it is necessary that the thickness of the channel material is decreased to appropriately reduce the rigidity against bending. For these reasons, the thickness of the channel material is preferably 250 µm or less, more preferably 100 µm or less, still more preferably 80 µm or less, and most preferably 50 µm or less. Meanwhile, the lower limit is preferably 10 µm or more in order to secure a sufficient flow path.

### (Material)

As a material for casting or molding the feed channel material and the permeate channel material, a thermoplastic resin is preferable from the viewpoint of casting or molding properties, and polyester, nylon, polyphenylene sulfide, polyethylene, polypropylene, polysulfone, polyether sulfone, polylactic acid, an acrylonitrile-butadiene-styrene (ABS) resin or a UV curable resin is more preferable from the viewpoint of suppressing damage to the separation membrane.

### (Wall for Controlling Flow of Feed Gas and Permeate Gas)

The feed channel material and the permeate channel material may be provided with curved or linear walls that control the flow of the feed gas and the permeate gas. Further, the wall material is not limited as long as it is not deteriorated depending on the pressure and temperature at which the separation membrane module is operated and the kind of the gas at the feed side.

### <Sealing of Ends of Separation Membrane>

The ends of the separation membrane sandwiching the feed channel material are appropriately sealed. Examples of the method of "sealing" include adhesion using an adhesive, a hot-melt technique or the like, fusion using heating, laser or the like, and insertion of a rubber sheet, and sealing by simple adhesion is preferable.

### <Increase in Area of Membrane>

Thicknesses of the permeate channel material and the feed channel material are reduced to create a space for the gas separation membrane module, and the space is filled with the separation membrane, so that it is possible to increase the membrane area of the gas separation membrane module. Particularly, the flow resistance of the channel material is reduced, whereby the influence of the increase in the flow resistance becomes insignificant if the thickness of the channel material is decreased. Thus, it is possible to improve the gas permeability by the increase in the membrane area.

### <Center Pipe>

As a form of the center pipe, a cylindrical shape can be used as described above, and the center pipe has one or a plurality of holes through which gas can pass at the outer periphery. Further, it may be configured that a partition wall is provided inside the center pipe, and the gas fed from one end cannot move to the other end and passes through holes provided to the outer periphery.

### <Separation Membrane>

In the present embodiment, the separation membrane includes a substrate, a porous support layer on the substrate, and a separation functional layer on the porous support layer. However, the substrate is not an essential element, and the separation membrane may include at least a porous support layer and a separation functional layer.

### (Substrate)

Examples of the substrate include a polyester-based polymer, a polyamide-based polymer, a polyolefin-based polymer, or a mixture or copolymer of these polymers. Among others, a cloth fabric of a polyester-based polymer having high mechanical and thermal stability is particularly preferable. As the form of the cloth fabric, a long fiber nonwoven fabric, a short fiber nonwoven fabric, and a weave or knit fabric can be preferably used. Here, the long fiber nonwoven fabric refers to a nonwoven fabric having an average fiber length of 300 mm or more and an average fiber diameter of 3 to 30 µm.

The volume of airflow through the substrate is preferably 0.5 cc/cm²/sec or more and 5.0 cc/cm²/sec or less. When the volume of airflow through the substrate is within the above range, the substrate is impregnated with a polymer solution that serves as the porous support layer. Accordingly, the adhesion to the substrate is improved, and the physical stability of the porous support membrane can be enhanced.

The thickness of the substrate is preferably within a range of 10 to 200 µm, and more preferably within a range of 30 to 120 µm. In the present specification, the thickness means an average value unless otherwise noted. Here, the average value represents an arithmetic mean value. Specifically, the thickness of the substrate is determined by calculating an average value of thicknesses at 20 points measured at intervals of 20 µm in a direction (surface direction of the membrane) orthogonal to the thickness direction in cross-section observation.

### (Porous Support Layer)

The porous support layer does not substantially have gas separation performance, and is for imparting strength to the separation functional layer having substantially separation performance. The size and distribution of the pores of the porous support layer are not particularly limited. A preferable example is a porous support layer having uniform and fine pores or fine pores gradually increasing in size from one surface on the side where the separation functional layer is formed to the other surface, the fine pores on the surface on the separation functional layer formed side having a size of 0.1 nm or more and 100 nm or less. However, the material used and the shape thereof are not particularly limited.

The porous support layer contains, for example, at least one polymer selected from the group consisting of homopolymers and copolymers of polysulfone, polyether sulfone, polyamide, polyester, cellulose-based polymer, vinyl polymer, polyphenylene sulfide, polyphenylene sulfide sulfone, polyphenylene sulfone, and polyphenylene oxide. Here, examples of the cellulose-based polymer include cellulose acetate and cellulose nitrate, and examples of the vinyl polymer include polyethylene, polypropylene, polyvinyl chloride, and polyacrylonitrile. The porous support layer more preferably contains cellulose acetate, polysulfone, polyether sulfone, polyamide, polyphenylene sulfide sulfone, or polyphenylene sulfone. Among these materials, polysulfone, polyether sulfone, and polyamide are particularly preferable because they have high chemical, mechanical, and thermal stability and are easily molded.

The thicknesses of the substrate and the porous support layer affect the strength of the separation membrane and the filling density when the separation membrane is formed into a module. In order to obtain sufficient mechanical strength and filling density, the total thickness of the substrate and the porous support layer is preferably 30 µm or more and 300 µm or less, and more preferably 100 µm or more and 220 µm or less. The thickness of the porous support layer is preferably 20 µm or more and 100 µm or less. The thicknesses of the substrate and the porous support layer are determined by calculating an average value of thicknesses at 20 points measured at intervals of 20 µm in a direction (surface direction of the membrane) orthogonal to the thickness direction in cross-section observation.

The porous support layer used in the present invention can be selected from various commercially available materials such as "Millipore Filter VSWP" (trade name) manufactured by Millipore Corporation and "Ultra Filter UK 10" (trade name) manufactured by Toyo Roshi Kaisha, Ltd., and can be manufactured according to the method described in "Office of Saline Water Research and Development Progress Report" No**.** 359 (1968).

### (Separation Functional Layer)

The separation functional layer includes, on the support layer, a graphene layer or a thin film layer mainly containing polyamide obtained by a polycondensation reaction of a polyfunctional amine and a polyfunctional acid halide. In other words, the separation functional layer contains graphene or crosslinked polyamide as a main component. Specifically, in the separation functional layer, the ratio of the graphene or the crosslinked polyamide may be 50 wt% or more, 70 wt% or more, or 90 wt% or more, and the separation functional layer may be configured to contain only the graphene or the crosslinked polyamide. When the separation functional layer contains 50 wt% or more of graphene or crosslinked polyamide, high membrane performance is easily exhibited.

The crosslinked polyamide may be a wholly aromatic polyamide or a wholly aliphatic polyamide, or may have both an aromatic moiety and an aliphatic moiety. In order to exhibit higher performance, the crosslinked polyamide is preferably wholly aromatic.

The polyfunctional amine is specifically a polyfunctional aromatic amine or a polyfunctional aliphatic amine, and the polyfunctional acid halide is a polyfunctional aromatic acid halide or a polyfunctional aliphatic acid halide. The polycondensation reaction is interfacial polycondensation.

The thickness of the separation functional layer is usually within a range of 0.01 to 1 µm, and preferably within a range of 0.1 to 0.5 µm in order to obtain sufficient separation performance and gas permeability. Hereinafter, the separation functional layer in the present invention is also referred to as "polyamide separation functional layer".

In a crosslinked polyamide functional layer constituting a composite semipermeable membrane, when the number of terminal amino groups is A, the number of terminal carboxy groups is B, and the number of amide groups is C, (A + B)/C ≤ 0.66 is preferably satisfied.

An amino group and a carboxy group are known to be a functional group having strong affinity for carbon dioxide. When the proportion of such functional groups in the polyamide is reduced, the affinities for carbon monoxide and carbon dioxide are reduced, and only the permeance of carbon monoxide and the permeance of carbon dioxide decrease without decreasing the permeance of a light gas such as hydrogen or helium, whereby the light gas/carbon monoxide separation selectivity and the light gas/carbon dioxide separation selectivity are improved.

In addition, as the proportion of the amide group in the polyamide increases, the degree of crosslinking in the polyamide is improved, the pore size decreases, the permeance of nitrogen, carbon monoxide, carbon dioxide, hydrogen sulfide, sulfurous acid gas, and hydrocarbons having a larger size than light gases such as hydrogen and helium decreases. Thus, the light gas/nitrogen separation selectivity, the light gas/carbon monoxide separation selectivity, the light gas/carbon dioxide separation selectivity, the light gas/hydrocarbon separation selectivity, the light gas/hydrogen sulfide separation selectivity, and the light gas/sulfurous acid gas separation selectivity are improved. Here, the molecular size of the gas is hydrogen < carbon dioxide < carbon monoxide = nitrogen < sulfur content (hydrogen sulfide and sulfurous acid gas), and the gas having a larger molecular size tends to be more easily separated. For example, the hydrogen/nitrogen separation selectivity, the hydrogen/carbon monoxide separation selectivity, the hydrogen/hydrocarbon separation selectivity, the hydrogen/hydrogen sulfide separation selectivity, and the hydrogen/sulfite gas separation selectivity tend to be higher than the hydrogen/carbon dioxide separation selectivity.

Here, the ratio of the number A of terminal amino groups, the number B of terminal carboxy groups, and the number C of amide groups can be determined by ¹³C solid NMR measurement of the separation functional layer. Specifically, the substrate is peeled off from 5 m² of the separation membrane to obtain the polyamide separation functional layer and the porous support layer, and then the porous support layer is dissolved and removed to obtain the polyamide separation functional layer. The obtained polyamide separation functional layer is measured by the DD/MAS-¹³C solid NMR method, and the ratio of numbers of respective functional groups can be calculated by comparing the integrated value of carbon peaks of each functional group or peaks of carbon bonded with each functional group.

In the present specification, the "polyfunctional aromatic amine" means an aromatic amine having two or more amino groups per molecule, in which the amino groups are at least either one of a primary amino group and a secondary amino group and at least one of those amino groups is a primary amino group, and the "polyfunctional aliphatic amine" means an aliphatic amine having two or more amino groups per molecule, in which the amino groups are at least either one of a primary amino group and a secondary amino group.

Examples of the polyfunctional aromatic amine include a polyfunctional aromatic amine in which two amino groups are bonded to an aromatic ring in a positional relationship of any of ortho-position, meta-position and para-position, such as o-phenylenediamine, m-phenylenediamine, p-phenylenediamine, o-xylylenediamine, m-xylylenediamine, p-xylylenediamine, o-diaminopyridine, m-diaminopyridine and p-diaminopyridine; a polyfunctional aromatic amine such as 1,3,5-triaminobenzene, 1,2,4-triaminobenzene, 3,5-diaminobenzoic acid, 3-aminobenzylamine, 4-aminobenzylamine, 2,4-diaminothioanisole, 1,3-diaminothioanisole, 1,3-diamino-5-(dimethylphosphino)benzene, (3,5-diaminophenyl)dimethylphosphine oxide, (2,4-diaminophenyl)dimethylphosphine oxide, 1,3-diamino-5-(methylsulfonyl)benzene, 1,3-diamino-4-(methylsulfonyl)benzene, 1,3-diamino-5-nitrosobenzene, 1,3-diamino-4-nitrosobenzene, 1,3-diamino-5-(hydroxyamino)benzene, and 1,3-diamino-4-(hydroxyamino)benzene; and a polyfunctional aliphatic amines such as ethylenediamine, 1,3-diaminopropane, 1,4-diaminobutane, 1,5-diaminopentane, piperazine, 2-methyl piperazine, 2,4-dimethyl piperazine, 2,5-dimethyl piperazine, and 2,6-dimethyl piperazine. These polyfunctional amines may be used singly or in combination of two or more kinds thereof.

The polyfunctional acid halide is also expressed as a polyfunctional carboxylic acid derivative, and indicates an acid halide having at least two carbonyl halide groups per molecule. Examples of the trifunctional acid halide include trimesic acid chloride, and examples of the bifunctional acid halide include biphenyldicarboxylic acid dichloride, azobenzenedicarboxylic acid dichloride, terephthalic acid chloride, isophthalic acid chloride, naphthalenedicarboxylic acid chloride, and oxalyl chloride. In consideration of reactivity with the polyfunctional amine, the polyfunctional acid halide is preferably a polyfunctional acid chloride, and in consideration of selective separability and heat resistance of the membrane, a polyfunctional acid chloride having 2 to 4 carbonyl chloride groups per molecule is preferable. Among others, trimesic acid chloride is more preferably used from the viewpoint of availability and ease of handling. These polyfunctional acid halides may be used singly or in combination of two or more kinds thereof.

Polyamides have high cohesiveness, and the solubility of light gases such as hydrogen and helium having low cohesiveness is low. However, the cohesiveness of the polyamides is reduced by introducing fluorine into an aromatic ring, and the solubility of the light gases is improved; as a result, the light gas/nitrogen separation selectivity is improved.

In the present specification, the "polyfunctional aromatic amine" means an aromatic amine having two or more amino groups per molecule, in which the amino groups are at least either one of a primary amino group and a secondary amino group and at least one of those amino groups is a primary amino group.

Examples of the polyfunctional aromatic amine include a polyfunctional aromatic amine in which two amino groups are bonded to an aromatic ring in a positional relationship of any of ortho-position, meta-position and para-position, such as o-phenylenediamine, m-phenylenediamine, p-phenylenediamine, o-xylylenediamine, m-xylylenediamine, p-xylylenediamine, o-diaminopyridine, m-diaminopyridine and p-diaminopyridine; and a polyfunctional aromatic amine such as 1,3,5-triaminobenzene, 1,2,4-triaminobenzene, 3,5-diaminobenzoic acid, 3-aminobenzylamine, 4-aminobenzylamine, 2,4-diaminothioanisole, 1,3-diaminothioanisole, 1,3-diamino-5-(dimethylphosphino)benzene, (3,5-diaminophenyl)dimethylphosphine oxide, (2,4-diaminophenyl)dimethylphosphine oxide, 1,3-diamino-5-(methylsulfonyl)benzene, 1,3-diamino-4-(methylsulfonyl)benzene, 1,3-diamino-5-nitrosobenzene, 1,3-diamino-4-nitrosobenzene, 1,3-diamino-5-(hydroxyamino)benzene, and 1,3-diamino-4-(hydroxyamino)benzene. These polyfunctional aromatic amines may be used singly or in combination of two or more thereof.

The polyfunctional aromatic acid halide is also expressed as a polyfunctional aromatic carboxylic acid derivative, and indicates an aromatic acid halide having at least two carbonyl halide groups per molecule. Examples of the trifunctional acid halide include trimesic acid chloride, and examples of the bifunctional acid halide include biphenyldicarboxylic acid dichloride, azobenzenedicarboxylic acid dichloride, terephthalic acid chloride, isophthalic acid chloride, and naphthalenedicarboxylic acid chloride. In consideration of reactivity with the polyfunctional aromatic amine, the polyfunctional aromatic acid halide is preferably a polyfunctional aromatic acid chloride, and in consideration of selective separability and heat resistance of the membrane, a polyfunctional aromatic acid chloride having 2 to 4 carbonyl chloride groups per molecule is preferable. Among others, trimesic acid chloride is more preferably used from the viewpoint of availability and ease of handling. These polyfunctional aromatic acid halides may be used singly or in combination of two or more kinds thereof.

Further, the crosslinked aromatic polyamide may have fluorine bonded to an aromatic ring. The aromatic ring to which fluorine is bonded may be derived from an amine or an acid halide.

### <Gas Separation Method>

The gas separation membrane module of the present invention can be utilized in a gas separation method for selectively permeating a light gas such as hydrogen or helium to increase the concentration. That is, the gas separation method in the present invention includes:
(1) a step of feeding a mixed gas containing a light gas to one surface of the gas separation membrane; and
(2) a step of, after the step (1), obtaining a gas having a light gas concentration higher than a light gas concentration of the mixed gas, from the other surface of the gas separation membrane. The gas having permeated through the gas separation membrane, i.e., the gas having a high light gas concentration is referred to as "permeate gas", and the gas having not passed through the gas separation membrane but remaining on one surface of the gas separation membrane is referred to as "concentrated gas".

In the gas separation method, the spiral gas separation membrane module described above can be housed in the pressure vessel and used. That is, a mixed gas is fed to the gas separation membrane module and separated into permeate gas and concentrated gas, whereby a specific gas is separated from the feed gas. At this time, the feed gas may be fed to the gas separation membrane or its module by raising the pressure with a compressor, or the permeate side of the gas separation membrane or its module may be depressurized by a pump. Further, gas separation may be performed by disposing the modules described above over a plurality of stages. In the case of using a plural-stage modules, either concentrated gas or permeate gas in the previous-stage module may be fed to the subsequent-stage module. In addition, concentrated gas or permeate gas in the subsequent-stage module may be mixed with the feed gas in the previous-stage module. At the time of feeding permeate gas or concentrated gas to the subsequent-stage module, the permeate gas or the concentrated gas may be pressurized by the compressor.

The gas feed pressure is not particularly limited, and is preferably in a range of 0.1 MPa to 2.5 MPa. When the gas feed pressure is 0.1 MPa or more, the gas permeation rate increases, whereas when the gas feed pressure is 2.5 MPa or less, the gas separation membrane or its module member can be prevented from undergoing pressure deformation. The value of "pressure at feed side/pressure at permeate side" is also not particularly limited, and is preferably in a range of 2 to 20. When the value of "pressure at feed side/pressure at permeate side" is 2 or more, the gas permeation rate can be increased, whereas when the value of "pressure at feed side/pressure at permeate side" is 20 or less, the power cost of the compressor for the feed side or the pump for the permeate side can be saved.

The gas feed temperature is not particularly limited, and is preferably in a range of 0°C to 200°C, and more preferably in a range of 25°C to 180°C. When the temperature is 25°C or more, good gas permeability is obtained, whereas when the temperature is 180°C or less, it is possible to prevent thermal deformation of the module member.

### EXAMPLES

Hereinafter, the present invention will be described in more detail with reference to Examples, but the present invention is not limited thereto at all.

### (Channel Material A)

As the channel material A, a polypropylene net (A-1) obtained by melt molding with a rotary die was used.

### (Channel Material B)

As the channel material B, the following plain weave meshes were used.
B-1: Diomesh PET-Screen 60-55PT (manufactured by Dio Chemicals, Ltd.)
B-2: Diomesh PET-Screen 100-47PT (manufactured by Dio Chemicals, Ltd.)
B-3: Diomesh PET-Screen 135-55PT (manufactured by Dio Chemicals, Ltd.)
B-4: Diomesh PET-Screen 250-47PT (manufactured by Dio Chemicals, Ltd.)
B-5: Diomesh PET-Screen 420-27PT (manufactured by Dio Chemicals, Ltd.)
B-6: Diomesh PET-Screen 100-55PT (manufactured by Dio Chemicals, Ltd.)
B-7: Diomesh PET-Screen 70-70PT (manufactured by Dio Chemicals, Ltd.)
B-8: Diomesh PET-Screen 160-64PT (manufactured by Dio Chemicals, Ltd.)

### (Channel Material C)

As the channel material C, the following three kinds of nonwoven fabrics were used.

C-1: 05TH-12H (manufactured by Hirose Paper Mfg Co., Ltd.)
C-2: 05TH-12S (manufactured by Hirose Paper Mfg Co., Ltd.)
C-3: 05TH-8S (manufactured by Hirose Paper Mfg Co., Ltd.)

### (Channel Material D)

An unstretched polypropylene film (Torayfan (registered trademark) manufactured by Toray Industries, Inc.) was subjected to imprint processing and CO₂ laser processing, thereby obtaining a rugged sheet having through-holes. Specifically, the unstretched polypropylene film was sandwiched between metallic molds having grooves formed by cutting, subjected to pressure keeping at 140°C and 15 MPa for 2 minutes, cooled at 40°C, and then taken out from the molds. Subsequently, recesses in the ruggedly were subjected to laser processing using the 3D-Axis CO2 Laser Marker MLZ9500, thereby obtaining through-holes. The through-holes had a diameter of 600 µm, and were provided at a pitch of 2 mm in each groove. In the table, the channel material was indicated by D-1.

### (Average Pore Size of Mesh)

The surface of the channel material was observed at a magnification of 100 times using a high-precision shape measurement system KS-1100 manufactured by KEYENCE CORPORATION, and the areas and circumferential lengths of 30 pores randomly extracted were measured. From the measured values, the circle equivalent diameters represented by "4 × area of pore in surface direction of channel material/circumferential length of the pore" were calculated. An average value of the 30 circle equivalent diameters thus obtained was calculated. An average value of circle equivalent diameters in the back surface of the channel material was calculated in the same manner as described above. Note that the front surface and the back surface simply mean one surface and the other surface, respectively, and do not refer to a specific surface.

### (Average Pore Size of Nonwoven Fabric)

The surface of the nonwoven fabric was photographed at a magnification of 100 times using a high-precision shape measurement system KS-1100 manufactured by KEYENCE CORPORATION, and the resulting image was processed to black and white with a texture value of 0. Subsequently, the obtained digital image was analyzed with image analysis software (ImageJ) to measure the pore area and the pore circumferential length. From the obtained values, the average value of the circle equivalent diameters was calculated in the same manner as in the mesh. The same operation was performed on both surfaces of the channel material.

### (Thicknesses of Feed Channel Material and Permeate Channel Material)

The thicknesses at 30 randomly selected places were measured using a Digimatic indicator (product number 547-301 manufactured by Mitutoyo Corporation), and the average value of the thicknesses was defined as the thickness.

### (Breaking Tension of Permeate Channel Material)

Two center pipes were prepared, permeate channel materials were cut into a width of 300 mm and a length of 1200 mm, and both ends of respective permeate channel materials in the length direction were attached to the two center pipes, respectively, using a double-sided tape (NICETACK NW-20 manufactured by NICHIBAN Co., Ltd.). Meanwhile, one center pipe was fixed at both ends, a knot was provided in the other center pipe with a PP rope threaded through a hollow portion, and a standard mechanical force gauge (PS-100N manufactured by IMADA CO., LTD.) was installed on the knot. Then, the permeate channel material A was pulled in the horizontal direction, and the tension when the permeate channel material A was broken was measured with the standard mechanical force gauge.

### (Production of Gas Separation Membrane Module V)

A dimethylformamide (DMF) solution containing 15 mass% of polysulfone was cast on a nonwoven fabric (air permeability: 1.0 cc/cm²/sec) formed of polyester fibers produced by a papermaking method at room temperature (25°C) and with an application thickness of 190 µm, and then immediately immersed in pure water for 5 minutes to form a porous support on the nonwoven fabric as a substrate.

Next, the substrate having the porous support formed thereon was immersed for 10 seconds in an aqueous solution in which 5.0 mass% of 2-ethyl piperazine, 500 ppm of sodium dodecyl diphenyl ether disulfonate and 2.0 mass% of trisodium phosphate were dissolved, and then nitrogen was blown from an air nozzle to remove an excessive aqueous solution. Subsequently, an n-decane solution containing 0.2 mass% of trimesic acid chloride which had been heated to 70°C was uniformly applied to the surface of the porous support, and held at a membrane surface temperature of 60°C for 3 seconds. Thereafter, the membrane surface temperature was cooled to 10°C, and the porous support was allowed to stand for 1 minute in an air atmosphere while this temperature was maintained, thereby forming a separation functional layer. The obtained composite semipermeable membrane was vertically held to remove the liquid, and washed with pure water at 60°C for 2 minutes to obtain a separation membrane.

The obtained separation membrane was cut into a width of 300 mm and air-dried in a greenhouse at 25°C. Thereafter, the separation membrane was folded while changing the separation membrane length according to the thickness of the channel material (i.e., as the thickness of the channel material decreases, the separation membrane becomes longer, and the area increases), and the feed channel material shown in Table 1 was arranged so as to be sandwiched between the folded surfaces of the separation membrane. Further, the permeate channel material was arranged on the surface of the separation membrane on the side opposite to the side where the feed channel material was arranged, an adhesive was applied to three sides of the end of the permeate channel material, and a separation membrane unit (the number of leaves: 3) as a laminate of the permeate channel material, the separation membrane, and the feed channel material was spirally wound around an ABS resin-made water collecting pipe (width: 300 mm, diameter: 17 mm, 80 pores × 2 rows of straight lines). After that, the obtained module was rotated by 50 turns while applying a load of 10 kg/300 mm with a contact pressure roller. Finally, the edges of both ends of the module were cut, and the tape was wound only on both the ends of the module to which the end plates were attached, and the diameter of the region was adjusted to 2.5 inches to produce a gas separation membrane module V.

### (Production of Gas Separation Membrane Module W)

One side of a permeate channel material A was bonded to an ABS resin-made center pipe (width: 300 mm, diameter: 17 mm, 80 pores × 2 rows of straight lines) with an adhesive. A first permeate channel material B was bonded onto the permeate channel material A, and another permeate channel material B was bonded onto the first permeate channel material B, and this process was repeated to produce a laminate of permeate channel materials as shown in Fig. 2. A gas separation membrane module W was produced in the same manner as in the gas separation membrane module V except for the above process.

### (Hydrogen/Oxygen Selectivity of Separation Membrane)

The separation membrane air-dried in a greenhouse at 25°C was wound 3 times around a rod having a diameter of 17 mm, and held for 24 hours. Thereafter, the separation membrane was stretched out and cut into a circular shape having an effective membrane area of 25 cm². The resulting separation membrane was attached to a permeation cell separated into two chambers of the feed side and the permeate side, and a feed gas containing 0.95 mol% of hydrogen and 5 mol% of oxygen was fed at 100 mL/min at a pressure of 0.1 MPa and a temperature of 25°C. While the chamber of the permeate side was sucked by a diaphragm pump, the operation was performed in a state where a difference between the pressure at the feed side and the pressure at the permeate side was 0.1 MPa. After the operation for 30 minutes, a permeate gas (i.e., a mixed gas of hydrogen and oxygen) was sent to gas chromatography having a thermal conductivity detector (TCD), the concentration of the permeate gas in the mixed gas was analyzed, and the permeance of hydrogen and oxygen was calculated. The hydrogen permeance was divided by the oxygen permeance to calculate the hydrogen/oxygen selectivity of the separation membrane.

### (Hydrogen/Oxygen Selectivity of Gas Separation Membrane Module)

End plates were attached to both ends of the gas separation membrane module, the module was housed in a pressure vessel (R2514B300E manufactured by Harbin ROPV Industrial Co., Ltd.), and high purity hydrogen gas was fed as a feed gas at a temperature of 25°C and 10 L/min. The operation was performed in such a manner that the chamber of the permeate side was sucked by a diaphragm pump so that a difference between the inlet pressure at the feed side and the outlet pressure at the permeate side was 0.1 MPa. After the operation for 30 minutes, a permeate gas (i.e., a mixed gas of hydrogen and oxygen) was sent to gas chromatography having a thermal conductivity detector (TCD), the hydrogen concentration of permeate gas in the mixed gas was analyzed, and the permeance of hydrogen was calculated. Next, the same measurement was performed using oxygen as the feed gas, and the oxygen permeance was calculated. Then, the obtained oxygen permeance was divided by the hydrogen permeance to obtain hydrogen/oxygen selectivity of the gas separation membrane module.

### (Loading Properties)

The hydrogen/oxygen selectivity of the gas separation membrane module with respect to the hydrogen/oxygen selectivity of the separation membrane described above was calculated and defined as loading properties. Hence, it can be said that as the calculated value is closer to 1, even when stress is applied to the outer periphery of the gas separation membrane module, the damage of the separation membrane is small and the gas separation membrane module has excellent loading properties into a pressure vessel.

### (Winding Properties)

The tension applied to the permeate channel material during winding was set to 5 kg/300 mm (49 N/300 mm), and 30 permeate channel materials were manually wound. The obtained gas separation membrane module was disassembled to take out a total of 300 separation membrane units. The feed channel material and the permeate channel obtained by removing separation membrane where no adhesive was applied were observed. A case where the number of the channel materials in which breakage or wrinkling occurred was 10 or less was evaluated as A, a case where the number of the channel materials in which breakage or wrinkling occurred was 11 or more and 20 or less was evaluated as B, a case where the number of the channel materials in which breakage or wrinkling occurred was 21 or more and 50 or less was evaluated as C, and a case where the number of the channel materials in which breakage or wrinkling occurred was 50 or more was evaluated as D.

### (Hydrogen Recovery Rate)

The hydrogen permeation amount per minute was calculated from the hydrogen permeance measured by the hydrogen/oxygen selectivity of the gas separation membrane module, and the hydrogen permeation amount was divided by the feed amount (5.7 L/min) of hydrogen in the feed gas. The obtained value was expressed as a percentage and was defined as the hydrogen recovery rate.

### Example 1 (reference)

A gas separation membrane module V was produced and evaluated, and the results were as shown in Table 1.

### [Table 1]

**[Table 1]**

| | | | Example 1 | Example 2 | Example 3 | Example 4 | Example 5 | Example 6 | Example 7 |
|---|---|---|---|---|---|---|---|---|---|
| Gas separation membrane module | | | V | V | V | V | V | V | V |
| Feed channel material and permeate channel material | Kind | | Net | **Rugged sheet** | Plain weave mesh | Plain weave mesh | Plain weave mesh | Plain weave mesh | Plain weave mesh |
| | | | A-1 | D-1 | B-1 | B-2 | B-3 | B-4 | B-5 |
| | | | - | - | 60-55PT | 100-47PT | 135-55PT | 250-47PT | 420-27PT |
| | Average pore size (µm) | Front surface | 950 | 600 | 370 | 210 | 130 | 60 | 40 |
| | | Back surface | 950 | 600 | 370 | 210 | 130 | 60 | 40 |
| | Thickness (µm) | | 290 | 250 | 100 | 80 | 90 | 60 | 40 |
| Loading properties (%) | | | 0.41 | 0.50 | 0.65 | 0.76 | 0.82 | 0.88 | 0.89 |
| Winding properties | | | B | B | B | B | B | B | B |
| Hydrogen recovery rate (%) | | | 8.2 | 9.2 | 15.4 | 16.8 | 16.1 | 18.6 | 20.7 |

### Examples 1 to 7 are Reference Examples.

### Examples 2 to 10 (reference)

Gas separation membrane modules were produced in the same manner as in Reference Example 1 except that the feed channel material and the permeate channel material were changed as shown in Tables 1 and 2. That is, gas separation membrane modules V each having one kind of permeate channel material were produced. The obtained gas separation membrane modules V were evaluated, and the results were as shown in Tables 1 and 2.

### Comparative Examples 1 to 3

Gas separation membrane modules V were produced in the same manner as in Reference Example 1 except that the feed channel material and the permeate channel material were changed as shown in Table 2.

The obtained gas separation membrane modules V were evaluated, and the results were as shown in Table 2.

In Comparative Examples 1 to 3, since the average pore size of the channel material was large, the separation membrane fell into the average pore size of the channel material due to the load of a contact pressure roll, and the separation membrane was broken. The loading properties were deteriorated as the hydrogen/oxygen selectivity gets lowered.

### Examples 11 to 17

The feed channel material and the permeate channel material were as shown in Tables 3 and 4, and gas separation membrane modules W each including two kinds of permeate channel materials were produced. The obtained gas separation membrane modules W were evaluated, and the results were as shown in Tables 3 and 4.

As is apparent from the results shown in Tables 1 to 4, it can be said that the gas separation membrane modules in Reference Examples 1 to 10 and Examples 11 to 17 have high loading properties to a pressure vessel and high winding stability while increasing the filling amount of the gas separation membrane.

### [Table 2]

**[Table 2]**

| | | | Example 8 | Example 9 | Example 10 | Comparative Example 1 | Comparative Example 2 | Comparative Example 3 |
|---|---|---|---|---|---|---|---|---|
| Gas separation membrane module | | | V | V | V | V | V | V |
| Feed channel material and permeate channel material | Kind | | (Nonwoven fabric) | (Nonwoven fabric) | (Nonwoven fabric) | Net | Net | Net |
| | | | C-1 | C-2 | C-3 | A-2 | A-3 | A-4 |
| | | | 05TH-12H | 05TH-12S | 05TH-8S | - | - | - |
| | Average pore size (µm) | Front surface | 10 µm or less | 10 µm or less | 10 µm or less | 5600 | 2100 | 1300 |
| | | Back surface | 10 µm or less | 10 µm or less | 10 µm or less | 4500 | 2100 | 1300 |
| | Thickness (µm) | | 30 | 14 | 10 | 800 | 540 | 330 |
| Loading properties (%) | | | 0.97 | 0.97 | 0.97 | 0.05 | 0.10 | 0.24 |
| Winding properties | | | C | C | C | B | B | B |
| Hydrogen recovery rate (%) | | | 22.0 | 24.3 | 25.0 | 3.4 | 4.9 | 7.5 |

### Examples 8 to 10 are Reference Examples.

### [Table 3]

**[Table 3]**

| | | | Example 11 | Example 12 | Example 13 | Example 14 | Example 15 |
|---|---|---|---|---|---|---|---|
| Gas separation membrane module | | | W | W | W | W | W |
| Permeate channel material A | Kind | | Plain weave mesh | Plain weave mesh | Plain weave mesh | Plain weave mesh | Plain weave mesh |
| | | | B-2 | B-2 | B-2 | B-2 | B-6 |
| | | | 100-47PT | 100-47PT | 100-47PT | 100-47PT | 100-55PT |
| | Breaking tension (kgf/300mm) | | 16 | 16 | 16 | 16 | 25 |
| | Average pore size (µm) | Front surface | 210 | 210 | 210 | 210 | 200 |
| | | Back surface | 210 | 210 | 210 | 210 | 200 |
| | Thickness (µm) | | 80 | 80 | 80 | 75 | 100 |
| Permeate channel material B | Kind | | (Nonwoven fabric) | (Nonwoven fabric) | (Nonwoven fabric) | (Nonwoven fabric) | (Nonwoven fabric) |
| | | | C-3 | C-2 | C-1 | C-1 | C-1 |
| | | | 05TH-8S | 05TH-12S | 05TH-12H | 05TH-12H | 05TH-12H |
| | Breaking tension (kgf/300mm) | | 2 | 5 | 10 | 10 | 10 |
| | Average pore size (µm) | Front surface | 10 µm or less | 10 µm or less | 10 µm or less | 10 µm or less | 10 µm or less |
| | | Back surface | 10 µm or less | 10 µm or less | 10 µm or less | 10 µm or less | 10 µm or less |
| | Thickness (µm) | | 10 | 14 | 30 | 40 | 40 |
| Loading properties (%) | | | 0.96 | 0.96 | 0.96 | 0.96 | 0.96 |
| Winding properties | | | B | B | B | B | A |
| Hydrogen recovery rate (%) | | | 19.1 | 19.1 | 19.1 | 19.3 | 18.1 |

### [Table 4]

**[Table 4]**

| | | | Example 16 | Example 17 |
|---|---|---|---|---|
| Gas separation membrane module | | | W | W |
| Permeate channel material A | Kind | | Plain weave mesh | Plain weave mesh |
| | | | B-7 | B-8 |
| | | | 70-70PT | 160-64PT |
| | Breaking tension (kgf/300mm) | | 30 | 95 |
| | Average pore size (µm) | Front surface | 300 | 100 |
| | | Back surface | 300 | 100 |
| | Thickness (µm) | | 130 | 110 |
| Permeate channel material B | Kind | | (Nonwoven fabric) | (Nonwoven fabric) |
| | | | C-1 | C-1 |
| | | | 05TH-12H | 05TH-12H |
| | Breaking tension (kgf/300mm) | | 10 | 10 |
| | Average pore size (µm) | Front surface | 10 µm or less | 10 µm or less |
| | | Back surface | 10 µm or less | 10 µm or less |
| | Thickness (µm) | | 40 | 40 |
| Loading properties (%) | | | 0.96 | 0.96 |
| Winding properties | | | A | A |
| Hydrogen recovery rate (%) | | | 16.8 | 17.7 |

### INDUSTRIAL APPLICABILITY

The gas separation membrane module of the present invention can be suitably used for separation of a mixed gas and the like.

### DESCRIPTION OF REFERENCE SIGNS

1: Separation membrane
2: Feed channel material
3: Permeate channel material
3A: Permeate channel material A
3B: Permeate channel material B
6: Center pipe
100: Gas separation membrane module
201: Feed gas
202: Permeate gas
203: Concentrated gas

## Claims

1. A gas separation membrane module (100) comprising:
a center pipe;
a plurality of separation membranes (1) each having a feed surface and a permeate surface, the separation membranes (1) being arranged such that the feed surfaces face each other and the permeate surfaces face each other;
a feed channel material (2) arranged between the feed surfaces; and
a permeate channel material (3) arranged between the permeate surfaces,
wherein the separation membranes (1), the feed channel material (2), and the permeate channel material (3) are wound around the center pipe (6), an average pore size on a front surface and an average pore size on a back surface of the feed channel material (2) are each 0.95 mm or less, and an average pore size on a front surface and an average pore size on a back surface of the permeate channel material (3) are each 0.95 mm or less, the average pore size being measured by the method of the description, and
wherein the permeate channel material (3) includes a permeate channel material A (3A) bonded to the center pipe (6) and a permeate channel material B (3B) bonded to the permeate channel material A (3A) and a breaking tension of the permeate channel material A (3A) is larger than a breaking tension of the permeate channel material B (3B), the breaking tension being measured by the method of the description.

2. The gas separation membrane module (100) according to claim 1, wherein the feed channel material (2) and the permeate channel material (3) each have a thickness of 10 µm to 250 µm, the thickness being measured by the method of the description.

3. The gas separation membrane module (100) according to claim 1 or 2, wherein the feed channel material (2) and the permeate channel material (3) are any one selected from the group consisting of a net, a nonwoven fabric, and a knit fabric.

4. The gas separation membrane module (100) according to any one of claims 1 to 3, wherein the permeate channel material A (3A) has a breaking tension of 147 N/300 mm (15 kgf/300 mm) or more and 980 N/300 mm (100 kgf/300 mm) or less.

5. The gas separation membrane module (100) according to any one of claims 1 to 4, wherein the permeate channel material B (3B) has a breaking tension of 19.6 N/300 mm (2 kgf/300 mm) or more and 98 N/300 mm (10 kgf/300 mm) or less.

6. The gas separation membrane module (100) according to any one of claims 1 to 5, wherein the permeate channel material A (3A) is a plain weave mesh or a rugged sheet, and the permeate channel material B (3B) is a nonwoven fabric.

7. The gas separation membrane module (100) according to any one of claims 1 to 6, wherein the separation membrane (1) has a substrate, a porous support layer arranged on the substrate, and a separation functional layer arranged on the porous support layer, and the separation functional layer contains crosslinked polyamide or graphene.

8. A method of producing hydrogen, comprising:
increasing a pressure of a hydrogen-containing gas and feeding the hydrogen-containing gas to the separation membrane module (100) according to any one of claims 1 to 7; or feeding the hydrogen-containing gas to the separation membrane module (100) according to any one of claims 1 to 7 and depressurizing a permeate side of the separation membrane module (100) to separate the hydrogen-containing gas into a permeate gas (202) and a concentrated gas (203); and obtaining hydrogen.

9. Use of a gas separation membrane module (100) according to any one of claims 1 to 7, for separation of a mixed gas.

## Patentansprüche

1. Gastrennmembran-Modul (100), das Folgendes umfasst:
ein zentrales Rohr,
eine Vielzahl von Trennmembranen (1), die jeweils eine Zufuhrfläche und eine Permeatfläche umfassen, wobei die Trennmembranen (1) derart angeordnet sind, dass die Zufuhrflächen einander zugewandt sind und die Permeatflächen einander zugewandt sind,
ein Zufuhrkanal-Material (2), das zwischen den Zufuhrflächen angeordnet ist, und
ein Permeatkanal-Material (3), das zwischen den Permeatflächen angeordnet ist;
wobei die Trennmembranen (1), das Zufuhrkanal-Material (2) und das Permeatkanal-Material (3) um das zentrale Rohr (6) herum gewickelt sind, wobei die mittlere Porengröße auf einer Vorderseite und die mittlere Porengröße auf einer Rückseite des Zufuhrkanal-Materials (2) jeweils 0,95 mm oder weniger betragen und die mittlere Porengröße auf der Vorderseite und die mittlere Porengröße auf der Rückseite des Permeatkanal-Materials (3) jeweils 0,95 mm oder weniger betragen, wobei die mittlere Porengröße durch das Verfahren gemäß der Beschreibung gemessen wird; und
wobei das Permeatkanal-Material (3) ein Permeatkanal-Material A (3A), das mit dem zentralen Rohr (6) verbunden ist, und ein Permeatkanal-Material B (3B), das mit dem Permeatkanal-Material A (3A) verbunden ist, umfasst und die Bruchspannung des Permeatkanal-Materials A (3A) größer ist als die Bruchspannung des Permeatkanal-Materials B (3B), wobei die Bruchspannung durch das Verfahren gemäß der Beschreibung gemessen wird.

2. Gastrennmembran-Modul (100) nach Anspruch 1, wobei das Zufuhrkanal-Material (2) und das Permeatkanal-Material (3) jeweils eine Dicke von 10 µm bis 250 µm aufweisen, wobei die Dicke durch das Verfahren gemäß der Beschreibung gemessen wird.

3. Gastrennmembran-Modul (100) nach Anspruch 1 oder 2, wobei das Zufuhrkanal-Material (2) und das Permeatkanal-Material (3) aus der aus einem Netz, einem Vlies und einem Gewirk bestehenden Gruppe ausgewählt ist.

4. Gastrennmembran-Modul (100) nach einem der Ansprüche 1 bis 3, wobei das Permeatkanal-Material A (3A) eine Bruchspannung von 147 N/300 mm (15 kp/300 mm) oder mehr und 980 N/300 mm (100 kp/300 mm) oder weniger aufweist.

5. Gastrennmembran-Modul (100) nach einem der Ansprüche 1 bis 4, wobei das Permeatkanal-Material B (3B) eine Bruchspannung von 19,6 N/300 mm (2 kp/300 mm) oder mehr und 98 N/300 mm (10 kp/300 mm) oder weniger aufweist.

6. Gastrennmembran-Modul (100) nach einem der Ansprüche 1 bis 5, wobei das Permeatkanal-Material A (3A) ein Leinwandbindungsnetz oder ein raues Tuch ist und das Permeatkanal-Material B (3B) ein Vlies ist.

7. Gastrennmembran-Modul (100) nach einem der Ansprüche 1 bis 6, wobei die Trennmembran (1) ein Substrat, eine auf dem Substrat angeordnete poröse Trageschicht und eine auf der porösen Trageschicht angeordnete funktionelle Trennschicht aufweist und die funktionelle Trennschicht vernetztes Polyamid oder Graphen enthält.

8. Verfahren zur Produktion von Wasserstoff, das Folgendes umfasst:
das Erhöhen des Drucks eines wasserstoffhältigen Gases und das Zuführen des wasserstoffhältigen Gases zu einem Trennmembran-Modul (100) nach einem der Ansprüche 1 bis 7; oder das Zuführen des wasserstoffhältigen Gases zu einem Trennmembran-Modul (100) nach einem der Ansprüche 1 bis 7 und das Verringern des Drucks an der Permeatseite des Trennmembran-Moduls (100), um das wasserstoffhältige Gas in ein Permeatgas (202) und ein konzentriertes Gas (203) zu trennen; sowie das Erhalten von Wasserstoff.

9. Verwendung eines Gastrennmembran-Moduls (100) nach einem der Ansprüche 1 bis 7 zum Trennen eines Mischgases.

## Revendications

1. Module à membrane de séparation de gaz (100), comprenant :
un tube central ;
une pluralité de membranes de séparation (1) présentant chacune une surface d'alimentation et une surface de perméat, les membranes de séparation (1) étant agencées de telle sorte que les surfaces d'alimentation se font face mutuellement et que les surfaces de perméat se font face mutuellement ;
un matériau de canal d'alimentation (2) agencé entre les surfaces d'alimentation ; et
un matériau de canal de perméat (3) agencé entre les surfaces de perméat,
dans lequel les membranes de séparation (1), le matériau de canal d'alimentation (2) et le matériau de canal de perméat (3) sont enroulés autour du tube central (6), une taille de pore moyenne sur une surface avant et une taille de pore moyenne sur une surface arrière du matériau de canal d'alimentation (2) sont chacune de 0,95 mm ou moins, et une taille de pore moyenne sur une surface avant et une taille de pore moyenne sur une surface arrière du matériau de canal de perméat (3) sont chacune de 0,95 mm ou moins, la taille de pore moyenne étant mesurée par le procédé de la description, et
dans lequel le matériau de canal de perméat (3) comprend un matériau de canal de perméat A (3A) lié au tube central (6) et un matériau de canal de perméat B (3B) lié au matériau de canal de perméat A (3A) et une tension de rupture du matériau de canal de perméat A (3A) est supérieure à une tension de rupture du matériau de canal de perméat B (3B), la tension de rupture étant mesurée par le procédé de la description.

2. Module à membrane de séparation de gaz (100) selon la revendication 1, dans lequel le matériau de canal d'alimentation (2) et le matériau de canal de perméat (3) présentent chacun une épaisseur de 10 µm à 250 µm, l'épaisseur étant mesurée par le procédé de la description.

3. Module à membrane de séparation de gaz (100) selon la revendication 1 ou 2, dans lequel le matériau de canal d'alimentation (2) et le matériau de canal de perméat (3) sont un quelconque choisi dans le groupe constitué d'un filet, d'un tissu non tissé et d'un tissu tricoté.

4. Module à membrane de séparation de gaz (100) selon l'une quelconque des revendications 1 à 3, dans lequel le matériau de canal de perméat A (3A) présente une tension de rupture de 147 N/300 mm (15 kgf/300 mm) ou plus et de 980 N/300 mm (100 kgf/300 mm) ou moins.

5. Module à membrane de séparation de gaz (100) selon l'une quelconque des revendications 1 à 4, dans lequel le matériau de canal de perméat B (3B) présente une tension de rupture de 19,6 N/300 mm (2 kgf/300 mm) ou plus et de 98 N/300 mm (10 kgf/300 mm) ou moins.

6. Module à membrane de séparation de gaz (100) selon l'une quelconque des revendications 1 à 5, dans lequel le matériau de canal de perméat A (3A) est un maillage à armure unie ou une feuille robuste, et le matériau de canal de perméat B (3B) est un tissu non tissé.

7. Module à membrane de séparation de gaz (100) selon l'une quelconque des revendications 1 à 6, dans lequel la membrane de séparation (1) présente un substrat, une couche de support poreuse agencée sur le substrat et une couche fonctionnelle de séparation agencée sur la couche de support poreuse, et la couche fonctionnelle de séparation contient un polyamide ou un graphène réticulé.

8. Procédé de production d'hydrogène, comprenant les étapes consistant à :
augmenter une pression d'un gaz contenant de l'hydrogène et alimenter le gaz contenant de l'hydrogène vers le module à membrane de séparation (100) selon l'une quelconque des revendications 1 à 7 ; ou
alimenter le gaz contenant de l'hydrogène vers le module à membrane de séparation (100) selon l'une quelconque des revendications 1 à 7 et
dépressuriser un côté de perméat du module à membrane de séparation (100) pour séparer le gaz contenant de l'hydrogène en un gaz de perméat (202) et un gaz concentré (203) ; et
obtenir de l'hydrogène.

9. Utilisation d'un module à membrane de séparation de gaz (100) selon l'une quelconque des revendications 1 à 7, pour la séparation d'un gaz mixte.
